# EUROPÄISCHE PATENTSCHRIFT

(11) **EP 2 616 268 B1**
(45) Veröffentlichungstag und Bekanntmachung des Hinweises auf die Patenterteilung: **21.11.2018**
(21) Anmeldenummer: 11781988.8
(22) Anmeldetag: 13.09.2011
(51) Int. Cl.: B60L 11/00, B60L 11/18, G07F 15/00

(54) **VORRICHTUNG ZUM LADEN DER ELEKTRISCHEN BATTERIEN EINSPURIGER FAHRZEUGE, INSBESONDERE FAHRRÄDER, WELCHE ELEKTRISCHE HILFSMOTOREN AUFWEISEN**
DEVICE FOR CHARGING THE ELECTRIC BATTERIES OF SINGLE-TRACK VEHICLES, IN PARTICULAR CYCLES, HAVING AN AUXILIARY ELECTRIC MOTOR
DISPOSITIF DE CHARGE DES BATTERIES ÉLECTRIQUES DE VÉHICULES À VOIE UNIQUE ÉQUIPÉS D'UN MOTEUR ÉLECTRIQUE, NOTAMMENT DE BICYCLETTES

(30) Priorität: 14.09.2010 AT 15192010
(43) Veröffentlichungstag der Anmeldung: 24.07.2013
(73) Patentinhaber: Innovametall Stahl- und Metallbau Ges.m.b.H., 4020 Linz (AT)
(72) Erfinder: PICHLBAUER, Klaus, A-4271 St. Oswald/Fr. (AT)
(74) Vertreter: Patentanwaltskanzlei Hübscher
(86) Internationale Anmeldenummer: PCT/AT2011/000371
(87) Internationale Veröffentlichungsnummer: WO 2012/034150

(56) Entgegenhaltungen:
- EP-A1- 2 168 848
- WO-A1-2008/033098
- FR-A1- 2 764 261
- GB-A- 2 330 959
- GB-A- 2 341 196

## Beschreibung

### Technisches Gebiet

Die Erfindung bezieht sich auf eine Vorrichtung zum Laden der elektrischen Batterien von einen elektrischen Hilfsmotor aufweisenden, einspurigen Fahrzeugen, insbesondere Fahrrädern, mit wenigstens einer über einen Netzschalter und eine Strommesseinrichtung an ein elektrisches Versorgungsnetz angeschlossenen Steckdose und mit einer über eine Eingabe- und Anzeigeeinrichtung ansteuerbaren Steuereinrichtung für den Netzschalter.

### Stand der Technik

Um die Batterien von Elektrofahrzeugen im Bereich von Parkplätzen über bordeigene Ladegeräte aufladen zu können, ist es bekannt (DE 44 14 008 C2), den einzelnen Parkplätzen über einen Netzschalter an ein elektrisches Versorgungsnetz angeschlossene Steckdosen zuzuordnen. Mit dem Anmelden eines Benützers über eine Eingabe- und Anzeigeeinrichtung wird der Netzschalter der jeweiligen Steckdose über eine Steuereinrichtung angesteuert und die Steckdose an das Versorgungsnetz angeschlossen, wobei zur Verrechnung der Ladestrom gemessen und mit den Messwerten die Steuereinrichtung zur Auswertung dieser Messwerte beaufschlagt wird. Durch eine vergleichsweise aufwendige Schaltung soll dabei ein Missbrauch beispielsweise durch ein Auswechseln oder Umstecken des Ladekabels unterbunden werden. Solche Vorrichtungen zum Laden der Batterie von Elektrofahrzeugen sind jedoch nicht auf die Bedürfnisse abgestimmt, die sich beim Laden der Batterien von mit einem Hilfsmotor versehenen, einspurigen Fahrzeugen, insbesondere von Fahrrädern, ergeben.

In der FR 2764261 und in der GB 2341196 sind geschlossene, abschliessbare Gehäuse für Zweiräder gezeigt, wobei das Gehäuse in GB 2341196 eine Ladesteckdose aufweist.

Eine offene Abstelleinrichtung zum Laden von Fahrradbatterien ist aus der EP 2168848 bekannt. WO 2008/033098 und GB 2330959 zeigen Aufbewahrungsboxen zum Batterieladen, wobei der Türschloss und die Ein- und Ausschaltung der Steckdose von einer Steuereinrichtung gesteuert werden.

### Darstellung der Erfindung

Der Erfindung liegt somit die Aufgabe zugrunde, eine Vorrichtung zum Laden der Batterien von mit einem elektrischen Hilfsmotor ausgerüsteten einspurigen Fahrzeugen so auszugestalten, dass trotz einfacher Konstruktionsbedingungen ein missbrauchsicheres Laden gewährleistet werden kann.

Ausgehend von einer Vorrichtung der eingangs geschilderten Art löst die Erfindung die gestellte Aufgabe dadurch, dass die Steckdose in einem ein Fahrzeug aufnehmenden Gehäuse angeordnet ist, dessen Tür ein beim Schließen der Tür selbständig verriegelndes, über einen Stelltrieb öffenbares Schloss umfasst, und dass der Stelltrieb des Schlosses in Abhängigkeit von der Ansteuerung der Steuereinrichtung durch die Eingabe- und Anzeigeeinrichtung und der Netzschalter zusätzlich in Abhängigkeit von der Schließstellung des Schlosses ansteuerbar sind.

Durch das Vorsehen von je ein einspuriges Fahrzeug aufnehmenden Gehäusen, die über eine verriegelbare Tür gesichert werden, kann in vergleichsweise einfacher Art ein Missbrauch ausgeschlossen werden, wenn das beim Schließen der Tür selbständig verriegelnde Schloss über die Steuereinrichtung nur dann betätigt werden kann, wenn ein berechtigter Benützer ein Fahrzeug mit aufzuladenden Batterien einstellt oder wieder dem Gehäuse entnimmt und der Netzschalter, über den die zum Anschließen des Ladekabels erforderliche Steckdose an ein Versorgungsnetz angeschlossen wird, in Abhängigkeit von der Schließstellung des Schlosses angesteuert wird. Diese Ansteuerung einerseits des Schlosses der Gehäusetür und anderseits des Netzschalters kann von einer Steuereinrichtung her durchgeführt werden, die an eine Eingabe- und Anzeigeeinrichtung angeschlossen ist, um aufgrund eingegebener Kenndaten die Berechtigung eines Benützers zu überprüfen und dem Benützer aufgrund seiner Berechtigung ein freistehendes Gehäuse zuzuweisen, dessen Tür aufgrund einer entsprechenden Beaufschlagung des Stelltriebs für das Schloss geöffnet werden kann, um ein einspuriges Fahrzeug in das Gehäuse einzustellen. Nach einem Anschließen des Ladekabels für eine fahrzeugeigene Ladeeinrichtung an die dem Gehäuse zugehörige Steckdose wird der Netzschalter für die Steckdose über die Steuereinrichtung mit dem Versorgungsnetz verbunden, sobald die Tür des Gehäuses geschlossen und das Schloss selbständig verriegelt wird. Erst bei einer neuerlichen Anmeldung des Benutzers über die ihm eigenen Kenndaten kann das Türschloss nach einem Abschalten der Steckdose vom Versorgungsnetz entriegelt und die Tür zum Entnehmen des Fahrzeugs geöffnet werden. Die Verrechnung des abgegebenen Ladestroms oder einer von der Einstellzeit des Fahrzeugs abhängigen Pauschalgebühr kann dabei in an sich bekannter Weise vorgenommen und zur Bezahlung z. B. mit Hilfe einer Kreditkarte genützt werden.

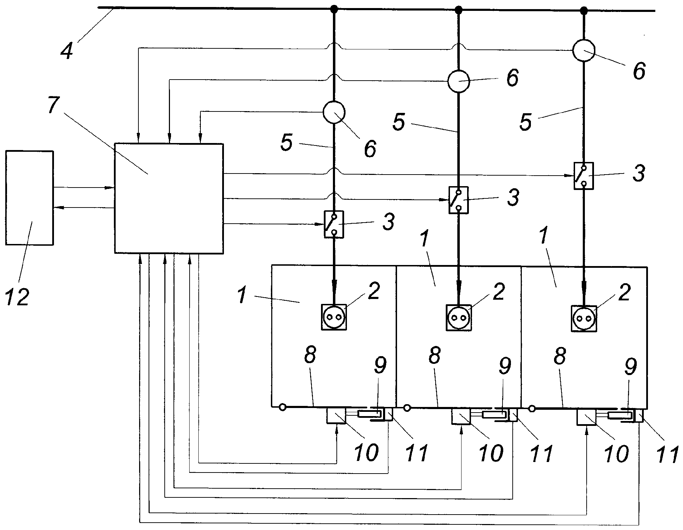

### Kurze Beschreibung der Zeichnung

In der Zeichnung ist der Erfindungsgegenstand beispielsweise dargestellt, und zwar wird eine erfindungsgemäße Vorrichtung zum Laden der elektrischen Batterien von einen elektrischen Hilfsmotor aufweisenden, einspurigen Fahrzeugen in einem schematischen Blockschaltbild gezeigt.

### Weg zur Ausführung der Erfindung

Die dargestellte Vorrichtung umfasst mehrere nebeneinandergereihte Gehäuse 1 zum Einstellen insbesondere je eines Fahrrads mit einem elektrischen Hilfsmotor. Diesen Gehäusen 1 ist je eine Steckdose 2 zugeordnet, an die ein Ladekabel zum Laden der Batterien für den Hilfsmotor über ein fahrzeugeigenes Ladegerät angeschlossen werden kann. Die Steckdosen 2 sind über Netzschalter 3 mit einem elektrischen Versorgungsnetz 4 verbunden. In den Stichleitungen 5 zu den einzelnen Steckdosen 2 sind Strommesseinrichtungen 6 vorgesehen, deren Messwerte an eine Steuereinrichtung 7 zur Erfassung des Ladestroms weitergeleitet werden. Mit Hilfe dieser Steuereinrichtung 7 können auch die Netzschalter 3 angesteuert werden.

Die einzelnen Gehäuse 1 sind jeweils mit einer Tür 8 versehen, deren Schloss 9 beim Schließen der Tür 8 selbständig verriegelt wird und nur über einen Stelltrieb 10 geöffnet werden kann, und zwar über eine Ansteuerung durch die Steuereinrichtung 7. Die verriegelte Schließstellung der Tür 8 wird durch einen Geber 11 erfasst und der Steuereinrichtung 7 angezeigt. Die Steuereinrichtung 7 ist an eine Eingabe- und Anzeigeeinrichtung 12 angeschlossen. Über diese Eingabe- und Anzeigeeinrichtung 12 meldet sich ein Benützer durch Eingabe seiner Kennung, beispielsweise mittels eines elektronischen Datenträgers, an, wobei die Berechtigung des Benützers anhand der eingelesenen Kennung überprüft wird. Aufgrund der festgestellten Berechtigung wird dem Benützer ein freies Gehäuse 1 zugewiesen, dessen Schloss 9 durch eine entsprechende Ansteuerung des Stelltriebs 10 entriegelt wird, sodass die Tür 8 geöffnet und das Fahrrad mit den aufzuladenden Batterien eingestellt werden kann. Nach einem Anschließen des Ladekabels an die Steckdose 2 ist die Tür 8 zu schließen, was mit einem selbständigen Verriegeln des Schlosses 9 verbunden ist. Die verriegelte Schließstellung der Tür 8 stellt eine Voraussetzung dar, um den zugehörigen Netzschalter 3 über die Steuereinrichtung 7 zu schließen und die Steckdose 2 an das elektrische Versorgungsnetz 4 anzuschließen, womit der Ladevorgang eingeleitet wird. Die Verrechnung kann über die Erfassung des Ladestroms mit Hilfe der Strommesseinrichtung 6 erfolgen, aber auch in Abhängigkeit von der Benützungsdauer über die Steuereinrichtung 7 vorgenommen werden.

Zum Entnehmen des Fahrrads aus dem Gehäuse 1 hat sich der Benützer wieder durch Eingabe seiner Kennung auszuweisen. Diese Kennungseingabe bedingt einerseits ein Öffnen des Netzschalters 3 und die endgültige Verrechnung des Ladestroms sowie anderseits eine Beaufschlagung des Stelltriebs 10 für das Schloss 9 des betreffenden Gehäuses 1, sodass der Benützer die Tür 8 öffnen und sein Fahrrad dem Gehäuse 1 entnehmen kann. Nach einem Schließen der Tür 8 steht das Gehäuse 1 zur Aufnahme eines weiteren Fahrrads wieder zur Verfügung.

## Patentansprüche

1. Vorrichtung zum Laden der elektrischen Batterien von einen elektrischen Hilfsmotor aufweisenden, einspurigen Fahrzeugen, insbesondere Fahrrädern, mit wenigstens einer über einen Netzschalter (3) und eine Strommesseinrichtung (6) an ein elektrisches Versorgungsnetz (4) angeschlossenen Steckdose (2) und mit einer über eine Eingabe- und Anzeigeeinrichtung (12) ansteuerbaren Steuereinrichtung (7) für den Netzschalter (3), **dadurch gekennzeichnet, dass** die Steckdose (2) in einem ein Fahrzeug aufnehmenden Gehäuse (1) angeordnet ist, dessen Tür (8) ein beim Schließen der Tür (8) selbständig verriegelndes, über einen Stelltrieb (10) öffenbares Schloss (9) umfasst, und dass der Stelltrieb (10) des Schlosses (9) in Abhängigkeit von der Ansteuerung der Steuereinrichtung (7) durch die Eingabe- und Anzeigeeinrichtung (12) und der Netzschalter (3) zusätzlich in Abhängigkeit von der Schließstellung des Schlosses (9) ansteuerbar sind.

## Claims

1. Apparatus for charging the electrical batteries of single-track vehicles, in particular bicycles, having an electrical auxiliary motor, comprising at least one socket (2) which is connected via a power switch (3) and a current measuring device (6) to an electrical supply network (4), and comprising a control device (7) for the power switch (3), said control device being able to be activated via an input and display device (12), **characterised in that** the socket (2) is arranged in a housing (1) which receives a vehicle and of which the door (8) comprises a lock (9) which locks automatically when the door (8) is closed and can be opened via an actuator (10), and **in that** the actuator (10) of the lock (9) can be activated in dependence upon the activation of the control device (7) by the input and display device (12) and the power switch (3) can be activated additionally in dependence upon the closed position of the lock (9).

## Revendications

1. Dispositif de charge des batteries électriques de véhicules à voie unique équipés d'un moteur auxiliaire électrique, en particulier de bicyclettes, avec au moins une prise de courant (2) raccordée à un réseau d'alimentation électrique (4) par un interrupteur (3) et un ampèremètre (6), et avec un dispositif de commande (7), pour l'interrupteur (3), pouvant être commandé par un dispositif de saisie et d'affichage (12), **caractérisé en ce que** la prise de courant (2) est disposée dans une enceinte (1) recevant un véhicule et dont la porte (8) comporte une serrure (9) pouvant être ouverte par un actionneur (10) et se verrouillant automatiquement lors de la fermeture de la porte (8), **en ce que** l'actionneur (10) de la serrure (9) peut être commandé en fonction de l'excitation du dispositif de commande (7) par le dispositif de saisie et d'affichage (12), et **en ce que** l'interrupteur (3) est en outre commandé en fonction de la position de fermeture de la serrure (9).
